(19) Europäisches Patentamt / European Patent Office / Office européen des brevets

(11) **EP 3 869 155 B1**

(12) **FASCICULE DE BREVET EUROPEEN**

(45) Date de publication et mention
de la délivrance du brevet:
**28.01.2026 Bulletin 2026/05**

(21) Numéro de dépôt: **21156714.4**

(22) Date de dépôt: **11.02.2021**

(51) Classification Internationale des Brevets (IPC):
**G01C 21/16** *(2006.01)* **G01S 19/53** *(2010.01)*

(52) Classification Coopérative des Brevets (CPC):
**G01C 21/165; G01S 19/49**

(54) **PROCÉDÉ DE DÉTERMINATION DE LA POSITION ET DE L ORIENTATION D'UN VÉHICULE**

VERFAHREN ZUR BESTIMMUNG DER POSITION UND ORIENTIERUNG EINES FAHRZEUGS

METHOD FOR DETERMINING THE POSITION AND ORIENTATION OF A VEHICLE

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: **21.02.2020 FR 2001719**

(43) Date de publication de la demande:
**25.08.2021 Bulletin 2021/34**

(73) Titulaire: **Commissariat à l'Energie Atomique et
aux Energies
Alternatives
75015 Paris (FR)**

(72) Inventeur: **VILLIEN, Christophe
38054 GRENOBLE Cedex 09 (FR)**

(74) Mandataire: **INNOV-GROUP
209 Avenue Berthelot
69007 Lyon (FR)**

(56) Documents cités:
**US-A1- 2009 326 740 US-A1- 2018 017 390**

- **SYED ZAINAB ET AL: "Economical and Robust
Inertial Sensor Configuration for a Portable
Navigation System", GNSS 2007 -
PROCEEDINGS OF THE 20TH INTERNATIONAL
TECHNICAL MEETING OF THE SATELLITE
DIVISION OF THE INSTITUTE OF NAVIGATION
(ION GNSS 2007), THE INSTITUTE OF
NAVIGATION, 8551 RIXLEW LANE SUITE 360
MANASSAS, VA 20109, USA, 28 September 2007
(2007-09-28), pages 2129 - 2135, XP056010349**

**Description**

L'invention concerne un procédé et un système de détermination de la position et de l'orientation d'un véhicule. L'invention concerne aussi un support d'enregistrement d'informations pour la mise en œuvre de ce procédé.

De nombreux procédés de détermination de la position et de l'orientation d'un véhicule sont connus. Par exemple, une présentation de l'état de l'art en la matière peut être trouvée dans la thèse suivante : S. Godha, "Performance Evaluation of Low Cost MEMS-Based IMU Integrated With GPS for Land Vehicle Navigation Application", PhD report, 2006. Par la suite, cette thèse est désignée par l'expression "Godha2006". De l'état de la technique est également connu de US2009/326740A1, US2018/017390A1 et de l'article de Syed ZAINAB et AI : "Economical and Robust Inertial Sensor Configuration for a Portable Navigation System", GNSS 2007 - Proceedings of the 20th international technical meeting of the satellite division of the institute of navigation, USA, 28 septembre 2007, pages 2129-2135.

Classiquement, un module d'intégration de mesure inertielle construit une position estimée $P_e$ et une orientation estimée $O_e$ du véhicule à partir :

- des mesures d'un accéléromètre et d'un gyromètre embarqués dans le véhicule, et
- de la précédente position et de la précédente orientation déterminées pour ce véhicule.

Ensuite, cette position estimée $P_e$ et cette orientation estimée $O_e$ sont corrigées par un module de correction pour obtenir une position corrigée $P_c$ et une orientation corrigée $O_c$. La position corrigée $P_c$ et l'orientation corrigée $O_c$ sont plus précises et sont délivrées sur une sortie du système de localisation en tant que position et orientation déterminées pour le véhicule. Cette position corrigée $P_c$ et cette orientation corrigée $O_c$ sont également acquises par le module d'intégration puis utilisées par ce module d'intégration comme, respectivement, précédente position et précédente orientation pour construire les prochaines position et orientation estimées du véhicule.

Le module de correction corrige la position $P_e$ et l'orientation $O_e$ en prenant en compte des mesures d'autres capteurs que celles de l'accéléromètre et du gyromètre embarqués. En particulier, les mesures d'une unité de géolocalisation par satellite et, éventuellement, les mesures d'autres capteurs sont utilisées par le module de correction à cette fin. Un tel procédé de détermination de la position et de l'orientation d'un véhicule est par exemple divulguée dans la demande US2009/326740.

Par ailleurs, les mesures prises en compte par le module de correction comportent très souvent une mesure de l'angle de lacet du véhicule issue d'un autre capteur et différente de l'estimation de cet angle contenue dans l'orientation estimée $O_e$. Par la suite, cet angle de lacet mesuré est noté $\Psi_m$. L'angle de lacet $\Psi_m$ est différent de celui qui peut être déduit de l'orientation $O_e$.

L'angle $\Psi_m$ peut être obtenu de diverses façons. Par exemple, il peut être obtenu à partir des mesures de vitesse de l'unité de géolocalisation par satellite. Dans ce dernier cas, on parle alors de « GNSS heading ». L'angle $\Psi_m$ peut également être obtenu à partir de mesures d'un magnétomètre.

L'invention vise à améliorer ces procédés connus de détermination de la position et de l'orientation du véhicule pour qu'ils convergent plus rapidement vers une position et une orientation précises du véhicule.

Elle a donc pour objet un procédé de détermination de la position et de l'orientation d'un véhicule conforme à la revendication 1.

L'invention a également pour objet un support d'enregistrement d'informations, lisible par un microprocesseur, comportant des instructions pour la réalisation du procédé ci-dessus, lorsque ces instructions sont exécutées par un microprocesseur.

Enfin, l'invention a aussi pour objet un système de localisation configuré pour mettre en œuvre le procédé ci-dessus.

L'invention sera mieux comprise à la lecture de la description qui va suivre, donnée uniquement à titre d'exemple non limitatif et faite en se référant aux dessins sur lesquels :

- la figure 1 est une illustration schématique d'un système de localisation d'un véhicule ;
- la figure 2 est une illustration schématique de différents modules logiciels mis en œuvre dans le système de la figure 1;
- la figure 3 est un organigramme d'un procédé de détermination de la position et de l'orientation d'un véhicule à l'aide du système de la figure 1 ;
- les figures 4 et 5 sont des graphes illustrant l'évolution au cours du temps de la marge d'erreur sur orientation déterminée pour le véhicule.

Dans ces figures, les mêmes références sont utilisées pour désigner les mêmes éléments.

Dans la suite de cette description, les caractéristiques et fonctions bien connues de l'homme du métier ne sont pas décrites en détail. En particulier, pour les connaissances générales de l'homme du métier concernant les systèmes de localisation d'un véhicule à l'aide d'une unité de géolocalisation par satellite et d'une unité de navigation inertielle, il est renvoyé, par exemple, à la thèse Godha2006.

Dans cette description, des exemples détaillés de modes de réalisation sont d'abord décrits dans le chapitre I en référence aux figures. Ensuite, dans le chapitre II suivant, des variantes de ces modes de réalisation sont présentées. Enfin, les avantages des différents modes de réalisation sont présentés dans un chapitre III.

Chapitre I : Exemples de modes de réalisation

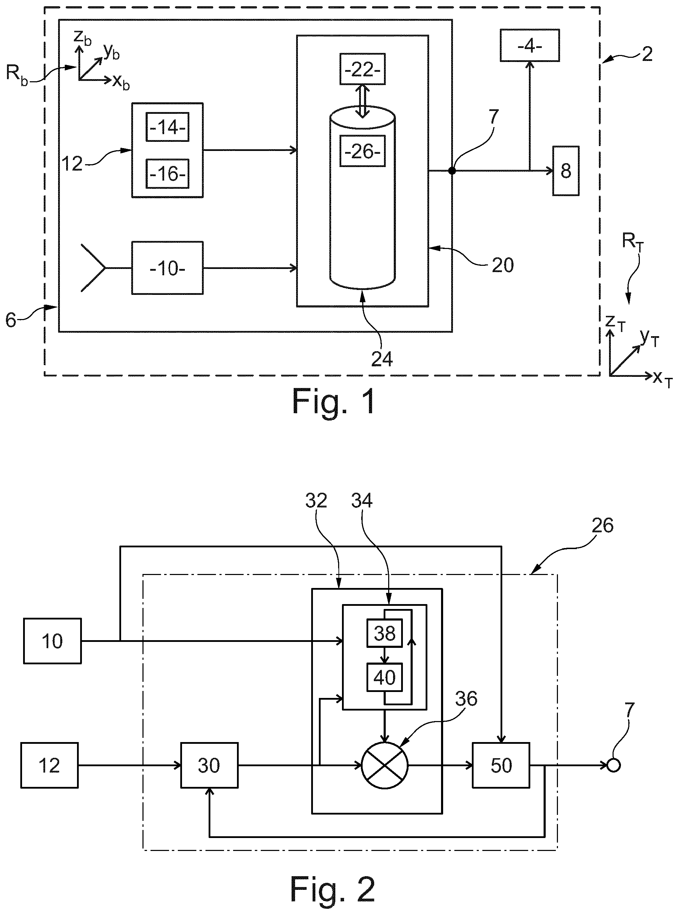

La figure 1 représente un véhicule automobile 2 capable de se déplacer sur la terre. A cet effet, il comporte typiquement des roues ou des chenilles. Le véhicule 2 est aussi équipé de moyens 4 de propulsion tel qu'un moteur qui entraîne les roues ou les chenilles.

Le véhicule 2 est aussi équipé d'un système 6 de localisation de ce véhicule. Ce système 6 est apte à déterminer la position, l'orientation et la vitesse du véhicule 2 dans un repère terrestre $R_T$. Ici, le repère terrestre $R_T$ est fixé sans aucun degré de liberté à la terre. Le repère $R_T$ comporte trois axes typiquement orthogonaux entre eux. Un repère mobile $R_b$ est également fixé sans aucun degré de liberté au véhicule 2. Ce repère $R_b$ comporte trois axes orthogonaux entre eux notés respectivement $x_b$, $y_b$ et $z_b$. Classiquement, lorsque le véhicule 2 se déplace horizontalement, les axes $x_b$ et $y_b$ sont dans un plan horizontal et l'axe $z_b$ est vertical. Ici, l'axe $x_b$ est orienté et pointe dans la direction vers laquelle se déplace le véhicule lorsque celui-ci se déplace en marche avant.

Ici, la position du véhicule 2 dans le repère $R_T$ est exprimée par la latitude L, la longitude $\lambda$ et l'altitude h de l'origine du repère $R_b$.

L'orientation du véhicule 2 est exprimée par l'angle $\psi$ de lacet (« yaw angle » en anglais), l'angle $\theta$ de tangage (« pitch angle » en anglais) et l'angle $\varphi$ de roulis (« roll angle » en anglais) du repère $R_b$ par rapport au repère $R_T$. En pratique, le plus souvent, l'orientation du véhicule se présente sous la forme d'une matrice d'orientation à partir de laquelle il est possible de déduire l'angle de lacet, l'angle de tangage et l'angle de roulis du véhicule. L'orientation du véhicule peut aussi se présenter sous la forme d'un vecteur comportant directement l'angle de lacet, l'angle de tangage et l'angle de roulis du véhicule. Par la suite, on considère que ces deux cas de figures sont équivalents et donc que l'orientation du véhicule comporte l'angle de lacet, l'angle de tangage et l'angle de roulis du véhicule à partir du moment où ces trois angles peuvent être déduits directement d'une matrice ou d'un vecteur.

La position, l'orientation et la vitesse déterminées par le système 6 sont délivrées sur une sortie 7.

Typiquement, le véhicule 2 comporte un poste 8 de pilotage pour guider ou assister au guidage du véhicule 2 vers une destination prédéfinie. Le poste 8 est raccordé à la sortie 7. Le poste 8 peut être un poste de pilotage manuel et/ou automatique. Dans le cas d'un poste de pilotage manuel, la position, l'orientation et la vitesse déterminées sont transmises à une interface homme-machine pour assister un être humain dans le pilotage des moyens 4 de propulsion. Dans le cas d'un poste de pilotage automatique, la position, l'orientation et la vitesse déterminées sont automatiquement converties en commandes de pilotage des moyens 4 de propulsion, puis transmises automatiquement à ces moyens 4 de propulsion.

Le système 6 comporte une unité 10 de géolocalisation par satellite et une unité 12 de mesure inertielle. L'unité 10 est connue sous l'acronyme GNSS (« *Global Navigation Satellite System* ». A partir des signaux satellitaires qu'elle reçoit, l'unité 10 génère des signaux représentatifs de la position et de la vitesse du véhicule dans le repère $R_T$. L'unité 10 est ici une unité de géolocalisation monoantenne et non pas une unité de géolocalisation multi-antenne. L'unité 10 est donc incapable de mesurer l'orientation absolue du véhicule 2 dans le repère $R_T$ à partir des signaux émis par les satellites.

L'unité 12 est connue sous l'acronyme IMU (« *Inertial Measurement Unit* »). L'unité 12 comporte notamment un accéléromètre triaxe 14 et un gyromètre triaxe 16. Grâce à ces capteurs, l'unité 12 est capable de mesurer la variation de l'orientation du véhicule 2. Par contre, l'unité 12 est incapable elle aussi de mesurer directement l'orientation du véhicule 2 dans le repère $R_T$. Ici, les axes de mesure de l'accéléromètre 14 et du gyromètre 16 sont confondus, respectivement, avec les axes $x_b$, $y_b$ et $z_b$ du repère $R_b$. De plus, l'accéléromètre 14 est agencé de manière à ce qu'une mesure positive de l'accélération du véhicule 2 le long de l'axe $x_b$ signifie que le véhicule 2 accélère en se déplaçant en marche avant.

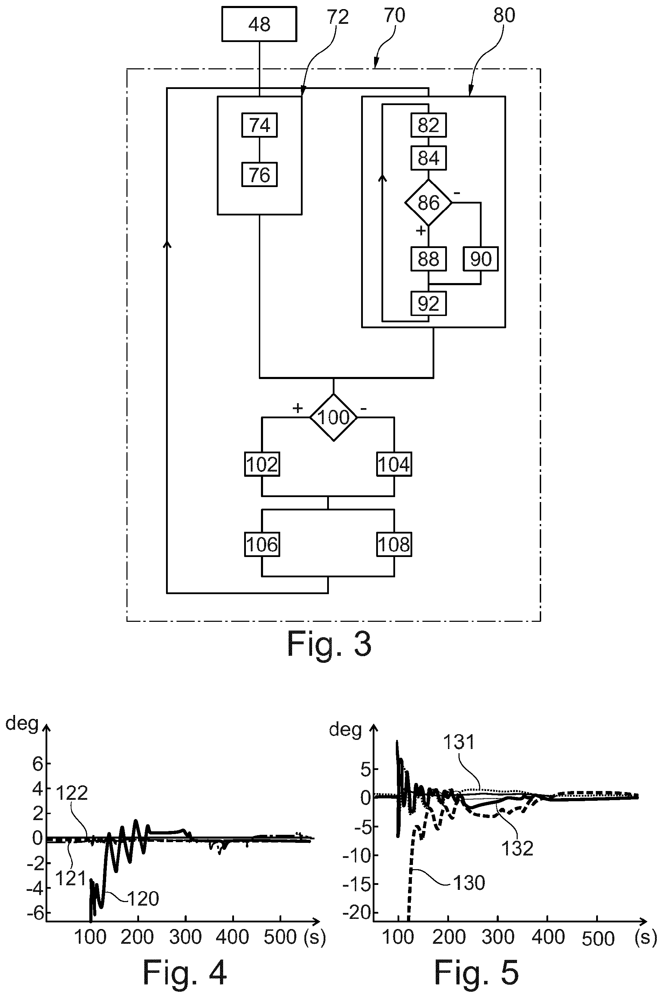

Pour déterminer la position, l'orientation et la vitesse du véhicule 2 à partir des mesures des unités 10 et 12, le système 6 comporte un calculateur électronique programmable 20. Ce calculateur 20 est apte à acquérir les mesures des unités 10 et 12 et, à partir de ces mesures, à déterminer la position, l'orientation et la vitesse du véhicule 2 dans le repère $R_T$. Le calculateur 20 comporte un microprocesseur 22 et une mémoire 24 comportant les instructions et les données nécessaires à la mise en œuvre du procédé décrit en référence à la figure 3.

Plus précisément, la mémoire 24 comporte les instructions d'un module logiciel 26 apte à déterminer la position, l'orientation et la vitesse du véhicule 2 à partir des mesures des unités 10 et 12 lorsqu'il est exécuté par le microprocesseur 22. Le module 26 implémente notamment un algorithme de fusion qui établit, à partir d'une précédente estimation de la position, de l'orientation et de la vitesse du véhicule 2 et de nouvelles mesures des unités 10 et 12 acquises depuis cette précédente estimation, une nouvelle estimation de la position, de l'orientation et de la vitesse du véhicule 2. L'algorithme de fusion établit également des marges d'erreur sur chaque nouvelle estimation.

Les principes généraux des algorithmes de fusion sont bien connus de l'homme du métier. Par exemple, le lecteur intéressé peut encore une fois se référer à la thèse Godha2006 précédemment citée. Typiquement, cet algorithme de fusion implémente un ou plusieurs filtres de Kalman. Ici, le module 26 implémente une architecture connue sous le terme de "en boucle fermée" ("closed loop integration scheme" ou "closed loop approach" en anglais).

La figure 2 représente plus en détail l'architecture du module 26. Le module 26 comporte un sous-module 30 d'intégration de mesure inertielle et un sous-module 32 de correction. De tels sous-modules 30 et 32 sont connus. Par exemple, pour une description détaillée de différents modes de réalisation possibles de ces sous-modules, le lecteur peut consulter le chapitre 4 de la thèse Godha2006. Ainsi, par la suite, seuls les détails nécessaires à la compréhension de l'invention sont décrits en détail.

Le sous-module 30 est connu sous le terme anglais de "Mechanization". Pour chaque instant k, le sous-module 30 construit une estimation brute d'une position $P_e(k)$, d'une orientation $O_e(k)$ et d'un vitesse $V_e(k)$ du véhicule 2. Chaque position $P_e(k)$, orientation $O_e(k)$ et vitesse $V_e(k)$ du véhicule 2 est un vecteur comportant trois coordonnées. Les coordonnées de la position $P_e(k)$ dans le repère $R_T$ sont notées $x_e(k)$, $y_e(k)$ et $z_e(k)$. Les coordonnées de l'orientation $O_e(k)$ sont notées $\psi_e(k)$, $\theta_e(k)$ et $\varphi_e(k)$. Les instants k successifs sont séparés les uns des autres par une période $T_e$. On note k-1 l'instant qui précède immédiatement l'instant k.

Le sous-module 30 construit la position $P_e(k)$, l'orientation $O_e(k)$ et la vitesse $V_e(k)$ à partir :

- de la précédente position $P_d(k-1)$, de la précédente orientation $O_d(k-1)$ et de la précédente vitesse $V_d(k-1)$ déterminées pour le véhicule 2 à l'instant k-1 par le système 6, et
- des mesures de l'accéléromètre 14 et du gyromètre 16 acquises par le sous-module 30 depuis l'instant k-1.

La combinaison du sous-module 30 et de l'unité 12 forme ce qui est connu sous l'acronyme INS (« Inertial Navigation System » ).

Le sous-module 32 corrige la position $P_e(k)$, l'orientation $O_e(k)$ et la vitesse $V_e(k)$ construites par le sous-module 30 pour obtenir une position corrigée $P_c(k)$, une orientation corrigée $O_c(k)$ et une vitesse corrigée $V_c(k)$. Les position, orientation et vitesse sont corrigées en fonction des mesures de l'unité 10. A cet effet, le sous-module 32 comporte un filtre de Kalman 34 et un additionneur 36. Ici, le filtre 34 est connu sous le terme anglais de "Error State Kalman Filter" car il estime des corrections à apporter à la position, l'orientation et la vitesse estimées par le sous-module 30. Ainsi, le filtre 34 établit, pour chaque instant k, un vecteur d'état $X_{k|k}$. Le vecteur d'état $X_{k|k}$ contient notamment des coefficients de correction de la position $P_e(k)$, de l'orientation $O_e(k)$ et de la vitesse $V_e(k)$. L'additionneur 36 combine les coefficients de correction établis par le filtre 34 avec la position $P_e(k)$, l'orientation $O_e(k)$ et la vitesse $V_e(k)$ pour obtenir la position corrigée $P_c(k)$, l'orientation corrigée $O_c(k)$ et la vitesse corrigée $V_c(k)$.

Par exemple, ici, le vecteur d'état $X_{k|k}$ contient des coefficients de correction $\delta_x(k)$, $\delta_y(k)$ et $\delta_z(k)$ des coordonnées, respectivement, $x_e(k)$, $y_e(k)$ et $z_e(k)$ de la position $P_e(k)$. L'additionneur 36 ajoute ces coefficients $\delta_x(k)$, $\delta_y(k)$ et $\delta_z(k)$, respectivement, aux coordonnées $x_e(k)$, $y_e(k)$ et $z_e(k)$ pour obtenir les coordonnées, respectivement, $x_c(k)$, $y_c(k)$ et $z_c(k)$ de la position corrigée $P_c(k)$.

Le vecteur d'état $X_{k|k}$ comporte aussi des coefficients de correction $\delta_\psi(k)$, $\delta_\theta(k)$ et $\delta_\varphi(k)$, respectivement, des coordonnées $\psi_e(k)$, $\theta_e(k)$ et $\varphi_e(k)$ de l'orientation $O_e(k)$. L'additionneur 36 ajoute ces coefficients $\delta_\psi(k)$, $\delta_\theta(k)$ et $\delta_\varphi(k)$, respectivement, aux coordonnées $\psi_e(k)$, $\theta_e(k)$ et $\varphi_e(k)$ pour obtenir les coordonnées corrigées, respectivement, $\psi_c(k)$, $\theta_c(k)$ et $\varphi_c(k)$ de l'orientation $O_c(k)$.

Classiquement, le vecteur d'état $X_{k|k}$ comporte aussi des coefficients de correction pour corriger d'autres paramètres, comme la vitesse $V_e(k)$, des biais de mesure de l'accéléromètre 14 et du gyromètre 16 ou autres.

Le filtre 34 est un algorithme récursif qui, à chaque instant k, fournit à l'additionneur 36 un nouveau vecteur d'état $X_{k|k}$ calculé à partir :

- du précédent vecteur d'état $X_{k-1|k-1}$,
- des mesures de l'unité 10 acquises depuis l'instant k-1, et
- de la position $P_e(k)$, de l'orientation $O_e(k)$ et de la vitesse $V_e(k)$ construites par le sous-module 30.

Par contre, le filtre 34 n'acquiert et n'exploite pas directement une mesure de l'angle de lacet $\Psi_m$. Autrement dit, le filtre 34 ne reçoit pas et n'utilise pas une mesure de l'angle de lacet obtenue à partir des mesures d'un autre capteur que l'unité 12.

Classiquement, le filtre 34 comporte un bloc 38 de prédiction d'un vecteur d'état $X_{k|k-1}$ et un bloc 40 de mise à jour du vecteur $X_{k|k-1}$ prédit. Ces blocs sont exécutés l'un après l'autre pour chaque vecteur $X_{k|k}$.

Plus précisément, le bloc 38 construit une prédiction $X_{k|k-1}$ du vecteur d'état à partir du précédent vecteur d'état $X_{k-1|k-1}$.

Ici, un exemple de mode de réalisation des blocs 38 et 40 est décrit dans le cas particulier où le filtre 34 est un filtre de Kalman linéaire.

L'équation de propagation ou de prédiction de l'état du filtre 34 mise en œuvre par le bloc 38 est définie par la relation (1) suivante : $X_{k|k-1} = A_{k-1}X_{k-1|k-1} + \nu$, où :

- $X_{k-1|k-1}$ est l'estimation du vecteur d'état à l'instant k-1 obtenue en prenant en compte toutes les mesures jusqu'à l'instant k-1,
- $X_{k|k-1}$ est la prédiction du vecteur d'état à l'instant k obtenue en prenant en compte toutes les mesures jusqu'à l'instant k-1 et sans prendre en compte les mesures réalisées à l'instant k,
- $A_{k-1}$ est la matrice de transition d'états,
- v est le bruit du processus.

L'équation de propagation ou de prédiction de la matrice de covariance de l'erreur mise en œuvre par le bloc 38 est définie par la relation (2) suivante : $P_{k|k-1} = A_{k-1}P_{k-1|k-1}A_{k-1}{}^T + Q_{k-1}$ , où :

- $P_{k-1|k-1}$ est l'estimation de la matrice de covariance de l'erreur à l'instant k-1 obtenue en prenant en compte toutes les mesures jusqu'à l'instant k-1,
- $P_{k|k-1}$ est l'estimation de la matrice de covariance $P_k$ à l'instant k obtenue en prenant seulement en compte les mesures jusqu'à l'instant k-1,
- $Q_{k-1}$ est la matrice de covariance du bruit de processus v.

Le bloc 40 corrige la prédiction $X_{k|k-1}$ du vecteur d'état de manière à obtenir le vecteur d'état $X_{k|k}$. Le vecteur $X_{k|k}$ corrigé est construit en fonction d'un écart $Y_k$ entre :

- une estimation $\hat{z}_k$ des mesures de grandeurs physiques à l'instant k, construite à partir de la prédiction $X_{k|k-1}$ fournie par le bloc 38, et
- les mesures $z_k$ de ces grandeurs physiques réalisées à l'instant k.

L'écart $Y_k$ est connu sous le nom de "innovation". Ici, les grandeurs physiques mesurées sont des écarts de position et de vitesse. Aucun écart entre une mesure de l'angle $\psi_m(k)$ et son estimation n'est utilisé.
L'estimation $\hat{z}_k$ est obtenue à l'aide de la relation (3) suivante : $\hat{z}_k = H_kX_{k|k-1}$, où $H_k$ est la matrice de mesure.
Les mesures $z_k$ sont obtenues à partir de la différence entre la position $P_e(k)$, la vitesse $V_e(k)$ et, respectivement, une position $P_{GPS}(k)$ et une vitesse $V_{GPS}(k)$ obtenues seulement à partir des mesures de l'unité 10.
L'innovation $Y_k$ est obtenue à l'aide de la relation (4) suivante : $Y_k = z_k - \hat{z}_k$.
Typiquement, le bloc 40 corrige la prédiction $X_{k|k-1}$ en y ajoutant l'innovation $Y_k$ multipliée par le gain $K_k$ de Kalman. Le gain $K_k$ est calculé à l'aide de la relation (5) suivante : $K_k = P_{k|k-1}H_k{}^T (H_kP_{k|k-1}H_k{}^T + R_k)^{-1}$, où la matrice $R_k$ est la matrice de covariance du bruit sur les mesures.
Ensuite, le vecteur d'état $X_{k|k}$ est obtenu à l'aide de la relation (6) suivante : $X_{k|k} = X_{k|k-1} + K_kY_k$.
La matrice mise à jour de covariance de l'erreur à l'instant k est calculée à l'aide de la relation (7) suivante : $P_{k|k} = (I - K_kH_k)P_{k|k-1}$, où I est la matrice identité. La matrice $P_{k|k}$ contient les marges d'erreur sur les estimations des coefficients de corrections. Ainsi, elle contient en particulier, les marges d'erreur sur l'estimation des coefficients $\delta_\psi(k)$, $\delta_\theta(k)$ et $\delta_\varphi(k)$.
Dans ce mode de réalisation particulier, l'additionneur 36 est un simple additionneur qui ajoute à la position $P_e(k)$, à l'orientation $O_e(k)$ et à la vitesse $V_e(k)$ les coefficients de corrections correspondant contenu dans le vecteur d'état $X_{k|k}$. Ensuite, l'additionneur 36 délivre sur une sortie du sous-module 32 la position $P_c(k)$, l'orientation $O_c(k)$ et la vitesse $V_c(k)$ corrigées ainsi obtenues.
Le module 26 comporte aussi un sous-module 50 de substitution. Le sous-module 50 acquiert notamment la position $P_e(k)$, l'orientation $O_c(k)$ et la vitesse $V_c(k)$ délivrées par le sous-module 32 de correction. Ensuite, il délivre, sur la sortie 7 du système 6, une position $P_d(k)$, une orientation $O_d(k)$ et une vitesse $V_d(k)$ en tant que, respectivement, position, orientation et vitesse du véhicule 2 déterminée par le système 6 pour l'instant k. Le fonctionnement du sous-module 50 est décrit plus en détail en référence au procédé de la figure 3.
La position $P_d(k)$, l'orientation $O_d(k)$ et la vitesse $V_d(k)$ sont également acquises par le sous-module 30 d'intégration qui les utilise en tant que précédente position, précédente orientation et précédente vitesse pour construire la position estimée $P_e(k+1)$, la orientation $O_e(k+1)$ et la vitesse $V_e(k+1)$.
L'utilisation du système 6 se décompose en périodes successives d'activité séparées les unes des autres par des périodes d'inactivité. Pendant les périodes d'inactivité, le système 6 n'est pas actif, c'est-à-dire qu'il ne détermine pas la position et l'orientation du véhicule 2. Typiquement, pendant les périodes d'inactivité, les unités 10 et 12 ne réalisent aucune mesure et ne transmettent aucune mesure au calculateur 20. Le calculateur 20 n'exécute donc aucun traitement sur ces mesures. Ces périodes d'inactivité durent généralement plusieurs minutes ou plusieurs heures ou plusieurs jours. Par exemple, pendant les périodes d'inactivité, le système 6 est éteint ou en veille.
A l'inverse, pendant chaque période d'activité, les unités 10 et 12 délivrent des nouvelles mesures au calculateur 20 qui les traite pour déterminer la position, l'orientation et la vitesse du véhicule 2 en fonction de ces nouvelles mesures. Ces périodes d'activité s'enchaînent successivement les unes après les autres et sont chacune séparées l'une de l'autre par une période d'inactivité plus ou moins longue.

Le fonctionnement du système 6 pendant l'une de ces périodes d'activité va maintenant être décrit en référence au procédé de la figure 3.

La période d'activité débute par une phase 48 d'initialisation du système 6. Cette phase 48 débute immédiatement après l'activation du système 6, c'est-à-dire typiquement juste après qu'il ait été mis sous tension. Lors de cette phase 48 différentes variables sont initialisées comme, par exemple, les estimations initiales des angles de lacet, de roulis et de tangage. Il existe des algorithmes qui permettent d'obtenir rapidement une estimation initiale des angles de roulis et de tangage ainsi que des autres paramètres souhaités. Par exemple, l'estimation initiale des angles de roulis et de tangage est obtenue à partir des mesures de l'accéléromètre 14. Lors de la phase 48, des coefficients de corrections des mesures de l'accéléromètre 14 et du gyromètre 16 peuvent aussi être initialisés.

L'angle de lacet est lui aussi initialisé. Toutefois, à ce stade, il est très difficile d'obtenir une estimation initiale de l'angle de lacet en absence d'un autre capteur capable de mesurer directement et de façon fiable cet angle. Ainsi, ici, la valeur initiale de l'angle de lacet est choisie arbitrairement. Par exemple, l'angle de lacet est systématiquement initialisé à la valeur nulle. Pour tenir compte de la grande incertitude sur cette estimation initiale de l'angle de lacet, la marge d'erreur sur cette estimation initiale est initialisée à une valeur importante. Ici, la marge d'erreur sur l'estimation de l'angle de lacet est représentée par l'écart-type $\sigma_\psi$. La valeur initiale $\sigma_\psi(0)$ de l'écart-type $\sigma_\psi$ est donc ici initialisée à une valeur supérieure à 60° ou 90° ou 180°. Ici, la valeur $\sigma_\psi(0)$ est initialisée avec la valeur 180°. L'écart-type $\sigma_\psi$ est égal à l'écart type $\sigma_{\delta\psi}$ sur l'estimation du coefficient $\delta_\psi$. Par conséquent, la marge d'erreur initiale $\sigma_{\delta\psi}(0)$ sur le coefficient $\delta_\psi(0)$ est prise égale à 180°. Le coefficient correspondant à la marge d'erreur sur le coefficient $\delta_\varphi(0)$ dans la matrice $P_{0|0}$ est donc initialisé en fonction de cette marge d'erreur initiale $\sigma_{\delta\psi}(0)$.

Une fois la phase 48 d'initialisation terminée, une phase 70 d'exécution du module 26 débute. Cette phase 70 dure alors jusqu'à la fin de la période d'activité et donc jusqu'au début de la prochaine période d'inactivité.

Lors de la phase 70, l'algorithme de fusion est exécuté de façon répétée par le module 26. Par exemple, à chaque fois que des nouvelles mesures de l'unité 10 et/ou de l'unité 12 sont acquises à l'instant k par le calculateur 20, l'algorithme de fusion est exécuté pour mettre à jour l'estimation de la position, de l'orientation et de la vitesse du véhicule 2 à cet instant k.

A chaque exécution de l'algorithme de fusion, lors d'une étape 72, le module 26 établit :

- les nouvelles estimations de la position $P_c(k)$, de l'orientation $O_c(k)$ et de la vitesse $V_c(k)$ du véhicule 2, et
- les nouvelles marges d'erreur sur ces nouvelles estimations de la position, de l'orientation et de la vitesse.

L'étape 72 comporte une opération 74 lors de laquelle l'accéléromètre 14 et le gyromètre 16 mesurent, respectivement, l'accélération et la vitesse angulaire du véhicule à l'instant k. Ensuite, lors de l'opération 74, le sous-module 30 construit les estimations $P_e(k)$, $O_e(k)$ et $V_e(k)$ à partir :

- de la précédente position $P_d(k-1)$, de la précédente orientation $O_d(k-1)$ et de la précédente vitesse $V_d(k-1)$, et
- des mesures de l'accéléromètre 14 et du gyromètre 16 réalisées à l'instant k.

Lors d'une opération 76, l'unité 10 mesure la position et la vitesse du véhicule 2 à l'instant k. Ensuite, lors de l'opération 76, le sous-module 32 corrige la position $P_e(k)$, l'orientation $O_e(k)$ et la vitesse $V_e(k)$ pour obtenir la position corrigée $P_c(k)$, l'orientation corrigée $O_c(k)$ et la vitesse corrigée $V_c(k)$.

Plus précisément, lors de l'opération 76, le bloc 38 construit les prédictions $X_{k|k-1}$ et $P_{k|k-1}$. Pour cela, le bloc 38 utilisent les relations (1) et (2) précédemment décrites. Par conséquent, le bloc 38 n'utilise pas les mesures de l'unité 10 réalisée à l'instant k. Ensuite, le bloc 40 obtient le vecteur d'état $X_{k|k}$ et la matrice $P_{k|k}$ en mettant en œuvre les relations (3) à (7) précédemment décrites. Par conséquent, le bloc 40 utilise les mesures de la position et de la vitesse du véhicule 2 réalisée par l'unité 10 à l'instant k.

Enfin, l'additionneur 36 ajoute les coefficients correcteurs contenus dans le vecteur $X_{k|k}$ aux coordonnées correspondantes de la position $P_e(k)$, de l'orientation $O_e(k)$ et de la vitesse $V_e(k)$ pour obtenir la position $P_c(k)$, l'orientation $O_c(k)$ et la vitesse $V_c(k)$. L'orientation $O_c(k)$ contient donc à ce stade un angle $\psi_c(k)$ de lacet corrigé, un angle $\theta_c(k)$ de tangage corrigé et de angle $\varphi_c(k)$ de roulis corrigé. La matrice $P_{k|k}$ contient un coefficient $\sigma_{\delta\psi}(k)^2$ qui représente la marge d'erreur sur le coefficient $\delta_\psi(k)$.

En parallèle, après ou avant l'étape 72, lors d'une étape 80, le sous-module 50 obtient l'angle de lacet $\psi_m(k)$ mesuré à l'instant k. Ici, l'angle $\psi_m(k)$ est obtenu à partir des mesures $v_{east}(k)$ et $v_{north}(k)$ de la vitesse du véhicule 2 dans les directions pointant, respectivement, vers l'Est et le Nord. Ici, les vitesses $v_{east}(k)$ et $v_{north}(k)$ sont directement délivrées par l'unité 10 au module 26. L'angle $\psi_m(k)$ ainsi obtenu est différent de l'angle de lacet contenu dans les orientations $O_e$ et $O_c$.

Ainsi, l'étape 80 débute par une opération 82 d'acquisition par le calculateur 20 des mesures $v_{east}(k)$ et $v_{north}(k)$ délivrées par l'unité 10 à l'instant k.

Ensuite, lors d'une opération 84, le sous-module 50 calcule un angle $\alpha$ à l'aide de la relation suivante : $\alpha = \text{atan}(v_{east}(k)/v_{north}(k))$, ou le symbole "atan" désigne la fonction arc-tangente.

Les mesures $v_{east}(k)$ et $v_{north}(k)$ ne permettent pas de savoir si le véhicule 2 se déplace en marche avant ou en marche arrière. Dès lors, lors d'une opération 86, le sous-module 50 détecte si le véhicule se déplace en marche arrière. Pour cela, lorsque le véhicule 2 est à l'arrêt, la composante $v_{xb}$ de la vitesse du véhicule 2 le long de l'axe $x_b$ est initialisée à zéro. La composante $a_{xb}$ de l'accélération du véhicule 2 mesurée par l'accéléromètre 14 est également initialisée à zéro. Ensuite, à chaque fois que le calculateur 20 acquiert une nouvelle mesure de l'accéléromètre 14, le sous-module 50 calcule la vitesse $v_{xb}(k)$ du véhicule 2 le long de l'axe $x_b$ à l'aide de la relation suivante : $v_{xb}(k) = v_{xb}(k-1) + (a_{xb}(k) - b_{ax})T_e$, où :

- $v_{xb}(k-1)$ est la précédente vitesse du véhicule 2 le long de l'axe $x_b$ calculée à l'instant k-1,
- $a_{xb}(k)$ est l'accélération du véhicule 2 le long de l'axe $x_b$ construite à partir de l'accélération mesurée, le long de l'axe $x_b$, à l'instant k par l'accéléromètre 14,
- $b_{ax}$ est un coefficient correcteur initialisé lors de la phase 48 pour corriger un biais de mesure de l'accéléromètre 14 le long de l'axe $x_b$, et
- $T_e$ est la durée de l'intervalle de temps entre les instants k et k-1.

De préférence, la valeur $a_{xb}(k)$ est construite de manière à minimiser ou éliminer la contribution de la gravité terrestre dans l'accélération mesurée par l'accéléromètre 14. Par exemple, la valeur $a_{xb}(k)$ est construite en filtrant, à l'aide d'un filtre passe-haut, les mesures de l'accéléromètre 14 ou en moyennant, sur une fenêtre glissante, les mesures de l'accéléromètre 14.

Si la vitesse $v_{xb}(k)$ ainsi calculée est supérieure à un seuil prédéterminé $S_1$, alors le sous-module 50 détecte que le véhicule 2 se déplace en marche avant. Pour cela, le seuil $S_1$ est supérieur ou égal à zéro. Par exemple, ici, le seuil $S_1$ est égal à zéro. Si au contraire, la vitesse $v_{xb}(k)$ est inférieure à $-S_1$, alors le module 50 détecte que le véhicule 2 se déplace en marche arrière.

Si le sous-module 50 détecte que le véhicule 2 se déplace en marche avant, lors d'une étape 88, l'angle $\psi_m(k)$ est pris égal à l'angle $\alpha$ calculé.

À l'inverse, lors d'une opération 90, si le sous-module 50 détecte que le véhicule 2 se déplace en marche arrière, l'angle $\psi_m(k)$ est pris égal à $\alpha + \pi$ rad.

Enfin, lors d'une opération 92, le sous-module 50 calcule la marge d'erreur $\sigma_{\psi m}(k)$ sur la mesure de l'angle de lacet réalisé. Par exemple, pour cela, le sous-module 50 utilise la relation suivante :

$$\sigma_{\psi m}(k) = \frac{\sqrt{(v_{north}(k)\,\sigma_{north}(k))^2 + (v_{east}(k)\,\sigma_{east}(k))^2}}{v_{east}(k)^2 + v_{north}(k)^2}$$

où :

- $\sigma_{east}(k)$ et $\sigma_{north}(k)$ sont les écarts-types sur les mesures, respectivement, des vitesses $v_{east}(k)$ et $v_{north}(k)$.

Ici, les écarts-types $\sigma_{east}(k)$ et $\sigma_{north}(k)$ sont fournis par l'unité 10, en même temps que celle-ci fournit les vitesses $v_{east}(k)$ et $v_{north}(k)$.

Une fois que le sous-module 50 a obtenu la position $P_e(k)$, l'orientation $O_c(k)$, la vitesse $V_c(k)$ ainsi que l'angle $\psi_m(k)$, lors d'une étape 100, il vérifie la pertinence de l'utilisation de l'angle $\psi_m(k)$ en lieu et place de l'angle $\psi_c(k)$.

Ici, l'utilisation de l'angle $\psi_m(k)$ à la place de l'angle $\psi_c(k)$ est considérée comme pertinente si cela permet d'améliorer l'orientation déterminée pour le véhicule 2. Pour cela, lors de l'étape 100, le sous-module 50 vérifie si un premier jeu de conditions prédéterminé est satisfait. Tant que ce premier jeu de conditions n'est pas satisfait, alors l'utilisation de l'angle $\psi_m(k)$ à la place de l'angle $\psi_c(k)$ est considérée comme pertinente.

Ici, ce premier jeu de conditions comporte une ou plusieurs conditions prédéterminées. Dans le cas présent, le jeu de conditions est considéré comme étant satisfait dès qu'au moins une des conditions prédéterminées de ce premier jeu de conditions est satisfaite. Dans ce mode de réalisation, à titre d'exemple, les conditions du premier jeu de conditions sont choisies dans le groupe constitué des conditions suivantes :

- condition (11) :

$$\text{condition (11) : } \sigma_{\psi m}(k) > (1/\beta)\sigma_{\psi c}(k),$$

- condition (12) :

condition (12) : $\sigma_{\psi c}(k) < S_{12}$,

- condition (13) :

condition (13) : $|\psi_m(k) - \psi_c(k)| < S_{13}$,

- condition (14) :

condition (14) :

$$\frac{1}{(N+1)} \sum_{i=k-N}^{i=k} \left| \Psi_m(i) - \Psi_c(i) \right| < S_{14}$$

où :

- N est une constante prédéterminée supérieure à deux ou quatre ou dix et inférieure, généralement, à cent, cinquante ou vingt,
- i est un indice entier qui varie entre k-N et k
- $\sigma_{\psi m}(i)$ est l'écart-type sur la mesure de l'angle $\psi_m(i)$,
- $\sigma_{\psi c}(k)$ est l'écart-type sur l'angle corrigé $\psi_c(k)$,
- β est une constante supérieure ou égale à un et généralement inférieure ou égale à 100 ou à 50, et de préférence comprise entre 1 et 10,
- les seuils $S_{12}$, $S_{13}$ et $S_{14}$ sont des constantes prédéterminées,
- le symbole |...| désigne la valeur absolue du terme compris entre les barres verticales.

La marge d'erreur sur l'angle $\psi_c(k)$ est égale à la marge d'erreur sur le coefficient $\delta_\psi(k)$. Ainsi, l'écart-type $\sigma_{\psi c}(k)$ est égal à l'écart-type $\sigma_{\delta\psi c}(k)$ sur l'estimation du coefficient $\delta\psi_c(k)$. L'écart-type $\sigma_{\delta\psi c}(k)$ est obtenu à partir du coefficient de la matrice de covariance $P_{k|k}$ établie par le filtre 34 et correspondant à la marge d'erreur sur le coefficient $\delta_\psi(k)$.

Les seuils $S_{12}$, $S_{13}$ et $S_{14}$ sont typiquement supérieurs à 1°. De préférence, ils sont compris entre 1° et 15° ou entre 1° et 10°.

Lorsque le premier jeu de conditions n'est pas satisfait, le procédé se poursuit par une étape 102. À l'inverse, lorsque ce premier jeu de conditions est satisfait, le procédé se poursuit par une étape 104.

Lors de l'étape 102, le sous-module 50 remplace seulement l'angle $\psi_c(k)$ par l'angle $\psi_m(k)$ pour obtenir l'orientation $O_d(k)$. Lors de cette étape 102, le sous-module 50 laisse inchangés, notamment, la position $P_c(k)$, la vitesse $V_c(k)$ ainsi que les angles de roulis et de tangage corrigés. Ainsi, la position $P_d(k)$ et la vitesse $V_d(k)$ délivrées par le sous-module 50 sont identiques, respectivement, à la position $P_c(k)$ et à la vitesse $V_c(k)$.

Lors de l'étape 104, à l'inverse, le sous-module 50 ne remplace pas l'angle $\psi_c(k)$ par l'angle $\psi_m(k)$. Ainsi, dans ce cas, la position $P_d(k)$, l'orientation $O_d(k)$ et la vitesse $V_d(k)$ sont égales, respectivement, à la position $P_c(k)$, à l'orientation $O_c(k)$ et à la vitesse $V_c(k)$.

À l'issue des étapes 102 et 104, lors d'une étape 106, le sous-module 50 délivre sur la sortie 7 la position $P_d(k)$, l'orientation $O_d(k)$ et la vitesse $V_d(k)$.

En parallèle, lors d'une étape 108, le sous-module 30 acquiert la position $P_d(k)$, l'orientation $O_d(k)$ et la vitesse $V_d(k)$. Ensuite, le sous-module 30 utilise cette position $P_d(k)$, cette orientation $O_d(k)$ et cette vitesse $V_d(k)$ en tant que, respectivement, précédente position, précédente orientation et précédente vitesse pour construire la prochaine position $P_e(k+1)$, la prochaine orientation $O_e(k+1)$ et la prochaine vitesse $V_e(k+1)$.

Au démarrage du système 6, la marge d'erreur $\sigma_{\psi c}(k)$ sur l'angle $\psi_c(k)$ est importante. Dès lors, généralement, le premier jeu de conditions n'est pas satisfait lors d'une phase transitoire qui se situe juste après le démarrage du système 6. Ainsi, lors de cette phase transitoire, le système 6 délivre l'orientation $O_d(k)$ dans laquelle l'angle $\psi_c(k)$ a été remplacé par l'angle $\psi_m(k)$. Cela permet d'obtenir une orientation du véhicule plus précise pendant cette phase transitoire.

En même temps, la mesure $\psi_m(k)$ n'est pas transmise au filtre 34 et n'est pas utilisée par le filtre 34 pour construire le vecteur d'état $X_{k|k}$ qui permet de corriger la position, l'orientation et la vitesse estimées par le sous-module 30. En particulier, l'angle $\psi_m(k)$ n'est pas utilisé par le bloc 40. Dès lors, l'écart entre les angles $\psi_c(k)$ et $\psi_m(k)$ n'est pas pris en compte pour corriger la position $P_e(k)$, l'orientation $O_e(k)$ et la vitesse $V_e(k)$ délivrées par le sous-module 30 pendant cette phase transitoire. Par contre, pendant la phase transitoire, l'angle $\psi_m(k)$ est pris en compte dans la prochaine estimation de la position, de l'orientation et de la vitesse du véhicule par l'intermédiaire de la rétroaction mise en œuvre lors de l'étape 108.

Comme ceci est expliqué ci-dessous, en référence aux graphes des figures 4 et 5, par rapport à une utilisation conventionnelle de l'angle $\psi_m(k)$, cette utilisation particulière de l'angle $\psi_m(k)$ permet d'accélérer la convergence du système 6 vers une orientation précise et stable du véhicule 2.

Ensuite, dès que la marge d'erreur sur l'angle $\psi_c(k)$ est suffisamment faible, dans le cas du procédé de la figure 3, l'angle $\psi_m(k)$ n'est plus utilisé pour déterminer l'orientation du véhicule. Le fait de ne plus utiliser l'angle $\psi_m(k)$ dès que le premier jeu de conditions est satisfait permet d'obtenir une estimation plus précise de l'angle de lacet que la simple utilisation de l'angle $\psi_m(k)$ mesurée. En effet, à ce stade la marge d"erreur sur l'angle de lacet corrigé est faible et le filtre 34 permet alors d'obtenir une valeur précise de cet angle. De plus, une mesure erronée de l'angle de lacet $\psi_m(k)$, par exemple causée par une mauvaise réception temporaire des signaux satellitaires par l'unité 10, dégrade moins rapidement la marge d'erreur sur la position, l'orientation et la vitesse déterminées pour le véhicule 2.

La figure 4 représente l'évolution au cours du temps des marges d'erreur sur les angles $\psi_c$ (courbe 120), $\theta_c$ (courbe 121) et roulis $\varphi_c$ (courbe 122) dans le cas où le système 6 est mis en œuvre et où l'écart initial entre les angles $\psi_c$ (O) et $\psi_m(O)$ est égal à -90 degrés.

Le graphe de la figure 5 correspond à un système de localisation conventionnel. Ici, ce système conventionnel est identique au système 6, sauf que :

- le sous-module 50 de substitution est omis, et
- l'angle $\psi_m$ mesuré est transmis au filtre de Kalman et utilisé par le bloc 40 pour mettre à jour le vecteur d'état $X_{k|k}$ en fonction de l'écart entre l'angle de lacet prédit et l'angle $\psi_m$ de lacet mesuré obtenu à partir des mesures de l'unité 10.

Sur les figures 4 et 5, l'axe des abscisses et l'axe des ordonnées représentent, respectivement, le temps, exprimé en seconde, et la marge d'erreur exprimée en degré. La figure 5 représente l'évolution au cours du temps des marges d'erreur sur l'angle $\psi_c$ de lacet (courbe 130), sur l'angle $\theta_c$ de tangage (courbe 131) et sur l'angle $\varphi_c$ de roulis (courbe 132) dans le cas du système conventionnel et dans le cas où l'écart initial entre les angles $\psi_c$ et $\psi_m$ est aussi égal à -90 degrés.

Sur ces figures, le véhicule 2 commence à se déplacer à l'instant t=100 secondes.

Il peut être observé que la marge d'erreur sur l'estimation des angles $\theta_c$ et $\varphi_c$ converge beaucoup plus rapidement vers une valeur faible dans le cas du système 6 que dans le cas du système conventionnel. De plus, avec le système conventionnel, l'amplitude des oscillations des marges d'erreur sur les angles $\theta_c$ et $\varphi_c$ est bien plus importante que dans le cas du système 6.

Le fait que le système 6 converge plus rapidement vers une orientation du véhicule précise est expliqué par le phénomène suivant. Dans un système conventionnel, le fait que l'écart entre l'angle $\psi_m(k)$ et $\psi_c(k)$ soit important conduit à corriger fortement l'angle $\psi_c(k)$, mais aussi à corriger d'autres paramètres du vecteur d'état $X_{k|k}$ et notamment les prédictions des angles de tangage et de roulis. Cela vient aussi du fait que le système d'équations du filtre 34 est obtenu en faisant l'hypothèse que l'erreur sur les angles de lacet, de tangage et de roulis est toujours faible et donc faible dès l'origine. Or, ce n'est pas le cas en pratique. Ainsi, pendant la phase transitoire, l'écart important entre les angles $\psi_m(k)$ et $\psi_c(k)$ se traduit par une dégradation de la précision sur l'estimation des angles $\theta_c(k)$ et $\varphi_c(k)$. Dans le système 6, puisque l'écart entre les angles $\psi_m(k)$ et $\psi_c(k)$ n'est pas utilisé par le filtre 34 pour corriger les différents paramètres du vecteur d'état $X_{k|k}$, l'augmentation de la marge d'erreur sur les angles $\theta_c(k)$ et $\varphi_c(k)$ est évitée.

Chapitre II : Variantes

Variantes relatives à l'obtention de l'angle $\psi_m(k)$

Il existe de nombreux autres modes de réalisation possibles pour l'étape 86 de détection d'un déplacement du véhicule 2 en marche arrière. Par exemple, dans un mode de réalisation particulièrement simple, le véhicule comporte un capteur spécifique qui détecte directement le sens dans lequel se déplace le véhicule 2. Dans ce cas, lors de l'étape 86, le sous-module 50 acquiert les mesures de ce capteur spécifique et détecte le déplacement en marche arrière à partir des mesures de ce capteur spécifique. Le capteur spécifique détecte, par exemple, directement, le passage de la marche arrière dans la boîte de vitesse du véhicule. Le capteur spécifique peut aussi être un odomètre qui mesure le sens et la distance parcourue par le véhicule 2.

Le déplacement en marche arrière peut aussi être détecté à partir de la coordonnée $v_{xc}(k)$ de la vitesse $v_c(k)$ établie par le sous-module 32. Si la vitesse $v_{xc}(k)$ est négative, cela signifie que le véhicule se déplace en marche arrière. Ce mode de réalisation dépend cependant fortement de la marge d'erreur sur la vitesse $v_c(k)$ corrigée.

Le mode de réalisation de l'étape 86 décrit en référence à la figure 3 fonctionne bien, notamment lorsque les angles de tangage et de roulis du véhicule 2 sont pratiquement nulles. Dans le cas contraire, il est possible de compenser l'effet de la gravité terrestre sur la mesure de l'accélération du véhicule en prenant en compte les valeurs des angles de tangage et de roulis.

Dans un autre mode de réalisation, le déplacement en marche arrière du véhicule est détecté en testant la condition suivante : $|\alpha-(\psi_c(k)-\pi)| < |\alpha-(\psi_c(k)|$. Si cette condition est satisfaite, cela signifie que le véhicule se déplace en marche arrière. À l'inverse, si cette condition n'est pas satisfaite, cela signifie que le véhicule 2 se déplace en marche avant. Dans une autre variante, le terme $\psi_c(k)$ dans la condition ci-dessus est remplacée par un angle de lacet mesuré par un capteur indépendant de l'unité 10. Ce capteur supplémentaire est par exemple un magnétomètre triaxe.

Dans un mode de réalisation simplifié, l'unité 10 ne fournit pas une mesure de la vitesse du véhicule, mais seulement sa position. Dans ce cas, les vitesses $v_{east}(k)$ et $v_{north}(k)$ nécessaires pour calculer l'angle $\alpha$ sont déduites des positions successives fournies par l'unité 10. Par exemple, les vitesses $v_{east}(k)$ et $v_{north}(k)$ sont obtenues à l'aide des relations suivantes :

$$v_{east}(k) = (x_{east}(k) - x_{east}(k-1))/T_e,$$

et

$$v_{north}(k) = (y_{north}(k) - y_{north}(k-1))/T_e,$$

où :

- $x_{east}(k)$ et $y_{north}(k)$ sont les positions du véhicule 2 dans les directions Est et Nord fournies par l'unité 10 à l'instant d'échantillonnage k, et
- $x_{east}(k-1)$ et $y_{north}(k-1)$ sont les positions du véhicule le long des directions Est et Nord fournies par l'unité 10 à l'instant d'échantillonnage k-1, et
- $T_e$ est la période d'échantillonnage.

Dans le cas ci-dessus, l'angle $\alpha$ peut être directement calculé à l'aide de la relation suivante :

$$\alpha = atan\left(\frac{x_{east}(k) - x_{east}(k-1)}{y_{north}(k) - y_{north}(k-1)}\right)$$

L'angle $\psi_m(k)$ peut être obtenu en utilisant d'autres capteurs que l'unité 10. Par exemple, en variante, l'angle $\psi_m(k)$ est obtenu à partir des mesures d'un magnétomètre. Dans ce cas, l'angle $\psi_m(k)$ est, par exemple, obtenu à l'aide de la relation suivante : $\psi_m(k) = -atan(b_y(k)/b_x(k))$, où : $b_x(k)$ et $b_y(k)$ sont les composantes du champ magnétique mesurées, respectivement, le long des directions $x_b$ et $y_b$ du repère $R_b$.

On notera que dans le cas où la mesure de l'angle $\psi_m(k)$ est obtenue à partir d'un magnétomètre, il n'est pas nécessaire de détecter la direction dans laquelle se déplace le véhicule. En effet, dans ce cas, la mesure de l'angle $\psi_m(k)$ fournie est une mesure absolue. Lorsque la mesure de l'angle $\psi_m(k)$ est obtenue à partir d'un autre capteur que l'unité 10, l'unité 10 n'est alors pas nécessairement utilisée pour obtenir l'angle $\psi_m(k)$. Toutefois, il est aussi possible de combiner la mesure de l'angle $\psi_m(k)$ obtenue à partir des mesures de l'unité 10, avec la mesure de l'angle $\psi_m(k)$ obtenue à partir d'autres capteurs pour obtenir une mesure de l'angle $\psi_m(k)$ plus précise.

En variante, l'étape 82 comporte aussi une opération de filtrage des mesures brutes des vitesses $v_{east}(k)$ et $v_{north}(k)$ avant d'utiliser ces mesures pour calculer l'angle $\alpha$. Dans un mode de réalisation particulièrement simple, l'opération de filtrage consiste simplement à calculer la moyenne des vitesses $v_{east}(k)$ et $v_{north}(k)$ pendant une fenêtre glissante.

Dans un autre mode de réalisation, les mesures de l'unité 10 et du gyromètre 16 sont combinées pour obtenir une mesure plus précise de l'angle $\psi_m(k)$.

En variante, si l'unité 10 ne fournit pas les écarts-types $\sigma_{east}(k)$ et $\sigma_{north}(k)$ sur les mesures des vitesses, respectivement, $v_{east}(k)$ et $v_{north}(k)$, alors ces écarts-types sont calculés par le sous-module 50.

Dans le cas particulier d'un véhicule qui ne peut pas se déplacer en marche arrière, les étapes 86 et 90 sont omises et l'angle $\psi_m(k)$ est systématiquement égal à l'angle $\alpha$ calculé.

Variantes de l'étape 100 :

En variante, lors de l'étape 100, le premier jeu de conditions est considéré comme étant satisfait uniquement si toutes les conditions de ce premier jeu de conditions sont satisfaites.

Le premier jeu de conditions peut aussi comporter des conditions supplémentaires. Par exemple, il peut comporter en plus ou à la place des conditions (11) à (14) précédemment décrites, les conditions suivantes :

- condition (15) : la vitesse du véhicule 2, en norme ou dans une direction donnée, est supérieure à un seuil prédéterminé $S_{15}$,
- condition (16) : la vitesse angulaire du véhicule 2 est inférieure à un seuil prédéterminé $S_{16}$, et
- condition (17) : $\sigma_{\psi m}(k) > S_{17}$, où $S_{17}$ est un seuil prédéterminé constant.

Dans une autre variante, le premier jeu de conditions comporte une seule condition choisie parmi les conditions (11) à (17) précédemment décrites.

Il est également possible d'activer le remplacement de l'angle $\psi_c(k)$ par l'angle $\psi_m(k)$ uniquement à partir du moment où un second jeu de conditions prédéterminées est satisfait. Par exemple, ce second jeu de conditions comporte une ou plusieurs conditions choisies dans le groupe constitué des conditions suivantes :

- condition (20) : plusieurs mesures de l'unité 10 ont été acquises,
- condition (21) : une phase statique d'une durée supérieure à 1 s ou 5 s ou 10 s a été détectée au préalable,
- condition (22) : avoir reçu une instruction indiquant que la phase 48 a été terminée avec succès,
- condition (23) : la durée écoulée depuis le début de la phase 48 et l'instant courant est supérieure à un seuil prédéterminé $S_{23}$, ce seuil prédéterminé $S_{23}$ étant typiquement supérieur à 1 s ou 5 s.

Une phase statique est une phase où le véhicule 2 est immobile dans le repère $R_T$. Si la phase 48 est exécutée pendant une phase statique, cela permet d'initialiser avec précision les angles de roulis et de tangage, ainsi que les coefficients de correction des mesures du gyromètre 16.

Dans une variante simplifiée, les étapes 100 et 104 sont omises. Dans ce cas, l'angle $\psi_c(k)$ est systématiquement remplacé par l'angle $\psi_m(k)$ pendant toute la durée de la phase active du système 6.

Variantes du filtre de Kalman :

De nombreux autres modes de réalisation du filtre 34 sont possibles. Par exemple, le filtre 34 peut être un filtre de Kalman linéaire, un filtre de Kalman étendu ou EKF (« Extended Kalman Filter »), un filtre UKF (« Unscented Kalman Filter ») ou encore un filtre de Kalman adaptatif.

De même, de nombreuses variantes du vecteur d'état $X_{k|k}$ sont possibles. Par exemple lorsque le système 6 ne détermine pas la vitesse du véhicule, les coefficients de correction de la vitesse du véhicule sont omis. Le vecteur d'état $X_{k|k}$ peut aussi ne pas comporter de coefficient de correction des biais de l'accéléromètre 14 et du gyromètre 16. Le vecteur d'état $X_{k|k}$ peut aussi comporter des variables d'état supplémentaires.

Ce qui a été précédemment enseigné dans le cas particulier où le sous-module 32 de correction utilise un ou plusieurs filtres de Kalman s'applique aussi à des sous-modules de correction qui construisent l'orientation $O_c(k)$ en utilisant d'autres estimateurs que des filtres de Kalman. De façon générale, ce qui a été décrit ici s'applique à tout module de correction qui met en œuvre des estimateurs dont les systèmes d'équations ont été établis en faisant l'hypothèse que l'erreur sur l'angle de lacet est faible dès l'origine.

Autres variantes :

Le système 6 décrit ici peut être utilisé dans tout véhicule qui ne peut pas se déplacer "en crabe", c'est-à-dire dans une direction parallèle à l'axe $y_b$. Ainsi, le véhicule peut aussi être un train par exemple.

Dans le cas où l'angle de lacet est mesuré à l'aide d'un capteur qui fournit une mesure de l'angle de lacet qui n'est pas affectée par un déplacement dans la direction $y_b$, alors le véhicule peut être tout objet susceptible de se déplacer. Par exemple, le véhicule peut être un avion, un bateau, un sous-marin, un missile, une fusée, un smartphone, un ordinateur portable ou similaire.

Dans un mode de réalisation simplifié, le système 2 ne détermine pas la vitesse du véhicule 2. Dans ce cas, le module 26 peut être simplifié.

D'autres modes de réalisation du sous-module 32 sont possibles. Par exemple, en variante, le sous-module 32 est agencé comme décrit dans l'architecture connue sous le nom anglais de « tight coupling ». Cette architecture est décrite plus en détail dans le chapitre 4.1.2 de la thèse Godha2006.

En variante, le système 6 est équipé de capteurs supplémentaires, comme par exemple un magnétomètre, un odomètre ou un baromètre. Dans ce cas, le sous-module 32 de correction est modifié pour prendre en compte les mesures de ces capteurs supplémentaires pour corriger l'orientation $O_e(k)$ construites par le sous-module 30 d'intégration.

Dans un autre mode de réalisation, lorsque le premier jeu de conditions est satisfait, c'est-à-dire lorsque le remplacement de l'angle $\psi_c(k)$ par l'angle $\psi_m(k)$ est inhibé, le sous-module 32 exécute un autre filtre de Kalman à la place du filtre 34 pour construire l'orientation $O_c(k)$. Cet autre filtre de Kalman, contrairement au filtre 34, reçoit directement l'angle $\psi_m(k)$ et utilise l'angle $\psi_m(k)$ pour mettre à jour le vecteur d'état $X_{k|k}$ en fonction de l'écart entre les angles de lacet mesuré et prédit par le bloc 38.

Ce qui a été décrit ici s'applique aussi au cas où la position, l'orientation et la vitesse du véhicule sont exprimées dans d'autres repères. Dans ces cas, il est possible, par un simple changement de repère, de revenir dans la situation décrite ici. A titre d'exemple d'autres repères utilisables à la place du repère $R_T$, on peut citer le repère ECI (Earth Centered Inertial). Le repère ECI n'est pas fixe par rapport à la surface de la terre puisque la terre tourne dans ce repère. Le le repère $R_T$ peut aussi être un repère fixe par rapport aux étoiles.

Chapitre III : Avantages des modes de réalisations décrits

Le fait de ne pas utiliser l'angle $\psi_m(k)$ mesuré pour corriger l'orientation $O_e(k)$ permet de limiter les instabilités qui apparaissent dans l'orientation déterminée par le système 6. Cela permet donc d'accélérer la convergence de l'orientation déterminée par le système 6 vers une orientation précise, c'est-à-dire une orientation sur laquelle la marge d'erreur est inférieure à 5 degrés ou à 1 degré. En parallèle, le fait de délivrer sur la sortie 7 une orientation $O_d(k)$ dans laquelle l'angle $\psi_c(k)$ a été remplacé par l'angle $\psi_m(k)$ permet d'obtenir, pendant une phase transitoire qui se produit au démarrage du système 6, une estimation de l'orientation du véhicule qui est plus précise.

Le fait d'arrêter de remplacer l'angle $\psi_c(k)$ par l'angle $\psi_m(k)$, dès que la marge d'erreur sur l'angle $\psi_c(k)$ corrigé est suffisamment faible, permet d'obtenir, après l'instant où le premier jeu de conditions est satisfait, une orientation déterminée pour le véhicule 2, qui est plus précise que si la l'angle $\psi_c(k)$ continué à être remplacé par l'angle $\psi_m(k)$. Cela améliore donc la détermination de l'orientation du véhicule.

Le fait de ne plus utiliser l'angle $\psi_m(k)$ pour déterminer l'orientation du véhicule une fois que le premier jeu de conditions est satisfait simplifie le système 6 et accélère la détermination de l'orientation du véhicule. De plus, il est considéré que l'orientation du véhicule ainsi déterminée est plus précise.

Le fait d'obtenir l'angle $\psi_m(k)$ à partir d'un ratio entre les vitesses $v_{east}(k)$ et $V_{north}(k)$ mesurées par l'unité 10 permet d'obtenir l'angle $\psi_m(k)$ sans avoir à utiliser un capteur supplémentaire, comme, par exemple, un magnétomètre ou une unité de géolocalisation par satellite à double antenne. Une unité de géolocalisation à double antenne est capable de mesurer l'orientation du véhicule en plus de sa position et de sa vitesse. Cela permet aussi d'éviter d'avoir recours à des méthodes de mesure de l'angle $\psi_m(k)$ à partir de la mesure du vecteur de rotation de la Terre. Cette dernière méthode est connue sous le nom de « gyro-compassing ». Cette méthode de « gyro-compassing » nécessite l'utilisation d'un gyromètre très sensible. Ainsi, la mesure de l'angle $\psi_m(k)$ à partir des vitesses $v_{east}(k)$ et $v_{north}(k)$ simplifie la réalisation du système 6.

Le fait de détecter un déplacement en marche arrière permet de tenir compte de cette information pour obtenir un angle $\psi_m(k)$ mesuré plus précis.

Le fait de détecter un déplacement en marche arrière à partir des mesures de l'accéléromètre 14 permet de détecter ce déplacement indépendamment de la précision sur la position, l'orientation et la vitesse déterminées pour le véhicule 2. Cela permet donc de détecter de façon plus fiable le déplacement en marche arrière juste après le démarrage du système 2, c'est-à-dire pendant la phase transitoire où les marges d'erreur sur la position, l'orientation et la vitesse déterminées peuvent être importantes.

De façon similaire, le fait de détecter un déplacement en marche arrière à partir des mesures d'un capteur indépendant de l'accéléromètre 14, du gyromètre 16 et de l'unité 10 permet également de détecter de façon fiable ce déplacement en marche arrière, notamment pendant la phase transitoire.

**Revendications**

1. Procédé de détermination de la position et de l'orientation d'un véhicule par un système de localisation fixé sur le véhicule, ce système de localisation comportant une unité de géolocalisation par satellite, une unité de navigation inertielle, un sous-module d'intégration de mesures inertielles et un sous-module de correction, ce procédé comportant les étapes suivantes :

a) la mesure (76), par l'unité de géolocalisation par satellite, de la position du véhicule ou de la position et de la vitesse du véhicule,
b) la mesure (74), par l'unité de navigation inertielle, de l'accélération et de la vitesse angulaire du véhicule,
c) la construction (74), par le sous-module d'intégration de mesures inertielles, d'une position et d'une orientation estimées du véhicule à partir d'une précédente position et d'une précédente orientation du véhicule et en utilisant les mesures de l'accélération et de la vitesse angulaire réalisées depuis cette précédente position et cette précédente orientation du véhicule, puis

d) la correction (76), par le sous-module de correction et en utilisant les mesures de l'unité de géolocalisation, de ces position et orientation estimées pour obtenir une première position corrigée et une première orientation corrigée, la première orientation corrigée contenant notamment un angle de lacet corrigé du véhicule, le procédé comportant en outre:

e) l'obtention (80), par le système de localisation, d'une mesure de l'angle de lacet du véhicule indépendante des mesures de la vitesse angulaire réalisées par l'unité de navigation inertielle, puis
f) le remplacement (102), dans la première orientation corrigée, de l'angle de lacet corrigé par l'angle de lacet mesuré, pour obtenir une deuxième orientation corrigée, puis
g) la délivrance (106), sur une sortie du système de localisation, de la première position corrigée et de la deuxième orientation corrigée en tant que, respectivement, position et orientation déterminées pour le véhicule et l'utilisation (108), lors de la prochaine exécution de l'étape c), de la première position corrigée et de la deuxième orientation corrigée en tant que, respectivement, précédente position et précédente orientation.

2. Procédé selon la revendication 1, dans lequel le procédé comporte :

- la vérification (100) qu'un jeu d'une ou plusieurs conditions prédéterminés est satisfait, ce jeu de conditions comportant au moins une condition choisie dans le groupe constitué des conditions suivantes :

1) la marge d'erreur sur l'angle de lacet mesuré est supérieure à un seuil prédéterminé,
2) la marge d'erreur sur l'angle de lacet corrigé est inférieure à un seuil prédéterminé,
3) l'écart entre l'angle de lacet mesuré et l'angle de lacet corrigé est inférieur à un seuil prédéterminé, et

- tant que ce jeu de conditions n'est pas satisfait, les étapes f) et g) sont exécutées (102), puis
- dès que ce jeu de conditions est satisfait, les étapes f) et g) sont inhibées (104).

3. Procédé selon la revendication 2, dans lequel à partir du moment où les étapes f) et g) sont inhibées et tant que le jeu de conditions prédéterminé reste satisfait, l'utilisation de l'angle de lacet mesuré pour déterminer l'orientation du véhicule est inhibée.

4. Procédé selon la revendication 2 ou 3, dans lequel les étapes f) et g) sont exécutées lors d'une phase transitoire par laquelle le procédé de détermination débute.

5. Procédé selon l'une quelconque des revendications précédentes, dans lequel l'obtention d'une mesure de l'angle de lacet indépendante des mesures de la vitesse angulaire réalisées par l'unité de navigation inertielle, comporte :

- le calcul (84) d'un premier angle à partir d'un ratio entre les vitesses mesurées du véhicule le long, respectivement, d'une première et d'une seconde directions orthogonales, ces première et seconde directions étant fixes et parallèles à la surface de la terre, puis
- la génération de l'angle de lacet mesuré à partir de ce premier angle.

6. Procédé selon la revendication 5, dans lequel la génération de l'angle de lacet mesuré à partir du premier angle comporte :

- la détection (86), par le système de localisation, d'un déplacement du véhicule en marche arrière, un déplacement en marche avant étant défini comme étant un déplacement du véhicule dans la direction vers laquelle pointe un axe orienté $x_b$ horizontal d'un repère mobile fixé sans aucun degré de liberté au véhicule et le déplacement en marche arrière étant un déplacement dans une direction opposée à la direction vers laquelle pointe l'axe orienté $x_b$, et
- lorsqu'un déplacement du véhicule en marche arrière est détecté, l'angle de lacet mesuré est pris égal (90) au premier angle plus 180°, et
- en absence de détection d'un déplacement du véhicule en marche arrière, l'angle de lacet mesuré est pris égal (88) au premier angle.

7. Procédé selon la revendications 6, dans lequel la détection d'un déplacement du véhicule en marche arrière comporte :

- l'obtention (86), à partir des mesures d'un accéléromètre de l'unité de navigation inertielle, de accélération du véhicule le long de la direction de déplacement en marche avant du véhicule, cet accéléromètre étant agencé dans le véhicule de manière à ce qu'une mesure positive de l'accélération du véhicule le long de l'axe orienté $x_b$ signifie que le véhicule accélère en se déplaçant en marche avant, puis

- le calcul (86) de la vitesse du véhicule le long la direction de déplacement en marche avant à partir de l'accélération obtenue, puis

- la comparaison (86) de la vitesse calculée à un seuil prédéterminé, et

- lorsque la vitesse calculée est supérieure à ce seuil, l'absence de détection d'un déplacement en marche arrière, et

- lorsque la vitesse calculée est inférieure à ce seuil, la détection d'un déplacement en marche arrière.

8. Procédé selon l'une quelconque des revendications 5 à 7, dans lequel les vitesses mesurées du véhicule le long, respectivement, de la première et de la seconde directions orthogonales, sont obtenues à partir des mesures de la position ou de la vitesse du véhicule réalisées par l'unité de géolocalisation par satellite.

9. Procédé selon la revendication 6, dans lequel :

- les vitesses mesurées du véhicule le long, respectivement, de la première et de la seconde directions orthogonales, sont obtenues à partir des mesures de la position ou de la vitesse du véhicule réalisées par l'unité de géolocalisation par satellite, et

- la détection d'un déplacement du véhicule en marche arrière comporte :

- la comparaison d'un premier terme à un second terme, le premier terme étant égal à $|\alpha-(\psi(k)-\pi)|$ et le second terme étant égal à $|\alpha-(\psi(k)|$, où :

- $\alpha$ est le premier angle calculé pour un instant k et exprimé en radian,
- $\psi(k)$ est égal à l'angle de lacet corrigé à l'instant k exprimé en radian ou à la valeur, exprimée en radian, de l'angle de lacet mesuré à l'instant k par un capteur supplémentaire indépendant de l'unité de géolocalisation par satellite, l'angle de lacet étant l'angle de lacet dudit repère mobile, et

- lorsque le premier terme est plus petit que le second terme, la détection d'un déplacement en marche arrière, et

- lorsque le premier terme est plus grand que le second terme, l'absence de détection d'un déplacement en marche arrière.

10. Procédé selon l'une quelconque des revendications précédentes, dans lequel, lors de l'étape d), un filtre de Kalman est mis en œuvre pour corriger la position et l'orientation estimées par le module d'intégration de mesures inertielles.

11. Support (24) d'enregistrement d'informations, lisible par un microprocesseur, **caractérisé en ce que** ce support comporte des instructions pour la réalisation d'un procédé conforme à l'une quelconque des revendications précédentes, lorsque ces instructions sont exécutées par le microprocesseur.

12. Système de localisation, apte à être fixé sur un véhicule, pour déterminer la position et l'orientation de ce véhicule, ce système de localisation comportant :

- une unité (10) de géolocalisation par satellite apte à mesurer la position du véhicule ou la position et la vitesse du véhicule,
- une unité (12) de navigation inertielle contenant un accéléromètre (14) et un gyromètre (16) pour mesurer l'accélération et de la vitesse angulaire du véhicule,
- un sous-module (30) d'intégration de mesures inertielles configuré pour construire une position et une orientation estimées du véhicule à partir d'une précédente position et d'une précédente orientation du véhicule et en utilisant les mesures de l'accélération et de la vitesse angulaire réalisées depuis cette précédente position et cette précédente orientation du véhicule, puis
- un sous-module (32) de correction configuré pour corriger, en utilisant les mesures de l'unité de géolocalisation, les position et orientation estimées de manière à obtenir une première position corrigée et une première orientation corrigée, la première orientation corrigée contenant notamment un angle de lacet corrigé du véhicule,
- le système comportant un sous-module (50) de substitution configuré pour :

- obtenir une mesure de l'angle de lacet du véhicule indépendante des mesures de la vitesse angulaire réalisées par le gyromètre de l'unité de navigation inertielle, puis
- remplacer, dans la première orientation corrigée, l'angle de lacet corrigé par l'angle de lacet mesuré, pour obtenir une deuxième orientation corrigée, puis
- délivrer, sur une sortie du système de localisation, la première position corrigée et de la deuxième orientation corrigée en tant que, respectivement, position et orientation déterminées pour le véhicule, et

- le sous-module (32) d'intégration étant est également configuré pour utiliser, lors de la prochaine construction d'une position et d'une orientation estimées du véhicule, la première position corrigée et de la deuxième orientation corrigée en tant que, respectivement, précédente position et précédente orientation.

**Patentansprüche**

1. Verfahren zur Bestimmung der Position und der Orientierung eines Fahrzeugs durch ein an dem Fahrzeug befestigtes Ortungssystem, wobei dieses Ortungssystem eine satellitengestützte Geolokalisierungseinheit, eine Trägheitsnavigationseinheit, ein Untermodul zur Integration von Trägheitsmessungen und ein Korrekturuntermodul umfasst, wobei dieses Verfahren die folgenden Schritte umfasst:

   a) das Messen (76), durch die satellitengestützte Geolokalisierungseinheit, der Position des Fahrzeugs oder der Position und der Geschwindigkeit des Fahrzeugs;
   b) das Messen (74), durch die Trägheitsnavigationseinheit, der Beschleunigung und der Winkelgeschwindigkeit des Fahrzeugs;
   c) das Konstruieren (74), durch das Untermodul zur Integration von Trägheitsmessungen, einer geschätzten Position und Orientierung des Fahrzeugs ausgehend von einer vorhergehenden Position und von einer vorhergehenden Orientierung des Fahrzeugs und unter Verwendung der Messungen der Beschleunigung und der Winkelgeschwindigkeit, die seit dieser vorhergehenden Position und dieser vorhergehenden Orientierung des Fahrzeugs ausgeführt wurden, dann
   d) das Korrigieren (76), durch das Korrekturuntermodul und unter Verwendung der Messungen der Geolokalisierungseinheit, dieser geschätzten Position und Orientierung, um eine korrigierte erste Position und eine korrigierte erste Orientierung zu erhalten, wobei die korrigierte erste Orientierung insbesondere einen korrigierten Gierwinkel des Fahrzeugs enthält, wobei das Verfahren ferner umfasst:

   e) das Erhalten (80), durch das Ortungssystem, einer Messung des Gierwinkels des Fahrzeugs, die von den von der Trägheitsnavigationseinheit ausgeführten Messungen der Winkelgeschwindigkeit unabhängig ist, dann
   f) das Ersetzen (102), in der korrigierten ersten Orientierung, des korrigierten Gierwinkels durch den gemessenen Gierwinkel, um eine korrigierte zweite Orientierung zu erhalten, dann
   g) das Ausgeben (106), über einen Ausgang des Ortungssystems, der korrigierten ersten Position und der korrigierten zweiten Orientierung als für das Fahrzeug bestimmte Position bzw. Orientierung und das Verwenden (108), bei der nächsten Ausführung des Schritts c), der korrigierten ersten Position und der korrigierten zweiten Orientierung als vorhergehende Position bzw. vorhergehende Orientierung.

2. Verfahren nach Anspruch 1, wobei das Verfahren umfasst:

   - das Überprüfen (100), ob ein Satz aus einer oder mehreren vorbestimmten Bedingungen erfüllt ist, wobei dieser Satz von Bedingungen mindestens eine Bedingung umfasst, die aus der aus den folgenden Bedingungen bestehenden Gruppe gewählt ist:

   1) die Fehlermarge des gemessenen Gierwinkels ist größer als ein vorbestimmter Schwellenwert,
   2) die Fehlermarge des korrigierten Gierwinkels ist kleiner als ein vorbestimmter Schwellenwert,
   3) die Differenz zwischen dem gemessenen Gierwinkel und dem korrigierten Gierwinkel ist kleiner als ein vorbestimmter Schwellenwert, und

   - solange dieser Satz von Bedingungen nicht erfüllt ist, werden die Schritte f) und g) ausgeführt (102), dann
   - sobald dieser Satz von Bedingungen erfüllt ist, werden die Schritte f) und g) unterdrückt (104).

3. Verfahren nach Anspruch 2, wobei von dem Zeitpunkt an, zu dem die Schritte f) und g) unterdrückt werden, und solange der vorbestimmte Satz von Bedingungen erfüllt bleibt, die Verwendung des gemessenen Gierwinkels zum Bestimmen der Orientierung des Fahrzeugs unterdrückt wird.

4. Verfahren nach Anspruch 2 oder 3, wobei die Schritte f) und g) in einer Übergangsphase durchgeführt werden, mit der das Verfahren zur Bestimmung beginnt.

5. Verfahren nach einem der vorhergehenden Ansprüche, wobei das Erhalten einer Messung des Gierwinkels, die unabhängig von den von der Trägheitsnavigationseinheit ausgeführten Messungen der Winkelgeschwindigkeit ist, umfasst:

- das Berechnen (84) eines ersten Winkels ausgehend von einem Verhältnis zwischen den entlang einer ersten bzw. einer zweiten Richtung, die orthogonal sind, gemessenen Geschwindigkeiten des Fahrzeugs, wobei diese ersten und zweiten Richtungen feststehend und parallel zu der Erdoberfläche sind, dann
- das Generieren des ausgehend von diesem ersten Winkel gemessenen Gierwinkels.

6. Verfahren nach Anspruch 5, wobei das Generieren des ausgehend von dem ersten Winkel gemessenen Gierwinkels umfasst:

- das Detektieren (86), durch das Ortungssystem, einer Rückwärtsfahrt des Fahrzeugs, wobei eine Vorwärtsfahrt definiert ist als eine Fahrt des Fahrzeugs in die Richtung, in die eine horizontale ausgerichtete $x_b$-Achse eines beweglichen Koordinatensystems zeigt, das ohne jeden Freiheitsgrad am Fahrzeug befestigt ist, und wobei die Rückwärtsfahrt eine Fahrt in eine Richtung ist, die entgegengesetzt zu der Richtung ist, in welche die ausgerichtete Achse $x_b$ zeigt, und
- wenn eine Rückwärtsfahrt des Fahrzeugs detektiert wird, der gemessene Gierwinkel gleich dem ersten Winkel plus 180° genommen wird (90), und
- bei Nichtdetektion einer Rückwärtsfahrt des Fahrzeugs der gemessene Gierwinkel gleich dem ersten Winkel genommen wird (88).

7. Verfahren nach Anspruch 6, wobei das Detektieren einer Rückwärtsfahrt des Fahrzeugs umfasst:

- das Erhalten (86), ausgehend von den Messungen eines Beschleunigungsmessers der Trägheitsnavigationseinheit, der Beschleunigung des Fahrzeugs entlang der Vorwärtsfahrtrichtung des Fahrzeugs, wobei dieser Beschleunigungssensor in dem Fahrzeug so angeordnet ist, dass eine positive Messung der Beschleunigung des Fahrzeugs entlang der ausgerichteten Achse $x_b$ bedeutet, dass das Fahrzeug beschleunigt, während es vorwärts fährt, dann
- das Berechnen (86) der Geschwindigkeit des Fahrzeugs entlang der Vorwärtsfahrtrichtung ausgehend von der erhaltenen Beschleunigung, dann
- das Vergleichen (86) der berechneten Geschwindigkeit mit einem vorbestimmten Schwellenwert, und
- wenn die berechnete Geschwindigkeit über diesem Schwellenwert liegt, das Nichtdetektieren einer Rückwärtsfahrt und
- wenn die berechnete Geschwindigkeit unter diesem Schwellenwert liegt, das Detektieren einer Rückwärtsfahrt.

8. Verfahren nach einem der Ansprüche 5 bis 7, wobei die entlang der ersten bzw. der zweiten orthogonal Richtung gemessenen Geschwindigkeiten des Fahrzeugs ausgehend von den von der satellitengestützten Geolokalisierungseinheit ausgeführten Messungen der Position oder der Geschwindigkeit des Fahrzeugs erhalten werden.

9. Verfahren nach Anspruch 6, wobei:

- die entlang der ersten bzw. der zweiten orthogonal Richtung gemessenen Geschwindigkeiten des Fahrzeugs ausgehend von den von der satellitengestützten Geolokalisierungseinheit ausgeführten Messungen der Position oder der Geschwindigkeit des Fahrzeugs erhalten werden, und
- das Detektieren einer Rückwärtsfahrt des Fahrzeugs umfasst:

- das Vergleichen eines ersten Terms mit einem zweiten Term, wobei der erste Term gleich $|\alpha-(\psi(k)-\pi)|$ ist und wobei der zweite Term gleich $|\alpha-(\psi(k)|$ ist, worin:

- $\alpha$ der erste Winkel ist, der für einen Zeitpunkt k berechnet wird und in Radiant ausgedrückt wird,
- $\psi(k)$ gleich dem korrigierten Gierwinkel zu dem Zeitpunkt k ist, der in Radiant ausgedrückt wird, oder gleich dem in Radiant ausgedrückten Wert des Gierwinkels, der zu dem Zeitpunkt k von einem zusätzlichen Sensor gemessen wird, der unabhängig von der satellitengestützten Geolokalisierungseinheit ist, wobei der Gierwinkel der Gierwinkel des beweglichen Koordinatensystems ist, und
- wenn der erste Term kleiner als der zweite Term ist, das Detektieren einer Rückwärtsfahrt, und
- wenn der erste Term größer als der zweite Term ist, das Nichtdetektieren einer Rückwärtsfahrt.

10. Verfahren nach einem der vorhergehenden Ansprüche, wobei bei dem Schritt d) ein Kalman-Filter eingesetzt wird, um die von dem Modul zur Integration von Trägheitsmessungen geschätzte Position und Orientierung zu korrigieren.

11. Medium (24) zur Aufzeichnung von Informationen, das von einem Mikroprozessor gelesen werden kann, **dadurch gekennzeichnet, dass** es Anweisungen umfasst, die bei der Ausführung dieser Anweisungen durch den Mikroprozessor ein Verfahren nach einem der vorhergehenden Ansprüche ausführen.

12. Ortungssystem, das geeignet ist, an einem Fahrzeug befestigt zu werden, um die Position und die Orientierung dieses Fahrzeugs zu bestimmen, wobei dieses Ortungssystem umfasst:

- eine satellitengestützte Geolokalisierungseinheit (10), die geeignet ist, die Position des Fahrzeugs oder die Position und die Geschwindigkeit des Fahrzeugs zu messen,
- eine Trägheitsnavigationseinheit (12), die einen Beschleunigungsmesser (14) und ein Gyrometer (16) enthält, um die Beschleunigung und die Winkelgeschwindigkeit des Fahrzeugs zu messen;
- ein Untermodul (30) zur Integration von Trägheitsmessungen, das dazu ausgelegt ist, eine geschätzte Position und Orientierung des Fahrzeugs ausgehend von einer vorhergehenden Position und von einer vorhergehenden Orientierung des Fahrzeugs und unter Verwendung der Messungen der Beschleunigung und der Winkelgeschwindigkeit, die seit dieser vorhergehenden Position und dieser vorhergehenden Orientierung des Fahrzeugs ausgeführt wurden, zu konstruieren, dann
- ein Korrekturuntermodul (32), das dazu ausgelegt ist, unter Verwendung der Messungen der Geolokalisierungseinheit die geschätzte Position und Orientierung zu korrigieren, so dass eine korrigierte erste Position und eine korrigierte erste Orientierung erhalten werden, wobei die korrigierte erste Orientierung insbesondere einen korrigierten Gierwinkel des Fahrzeugs enthält,
- wobei das System ein Substitutionsuntermodul (50) umfasst, das dazu ausgelegt ist:

- eine Messung des Gierwinkels des Fahrzeugs zu erhalten, die unabhängig von den von dem Gyrometer der Trägheitsnavigationseinheit ausgeführten Messungen der Winkelgeschwindigkeit ist, dann
- in der korrigierten ersten Orientierung den korrigierten Gierwinkel durch den gemessenen Gierwinkel zu ersetzen, um eine korrigierte zweite Orientierung zu erhalten, dann
- über einen Ausgang des Ortungssystems die korrigierte erste Position und die korrigierte zweite Orientierung als für das Fahrzeug bestimmte Position bzw. Orientierung auszugeben, und
- wobei das Untermodul (32) zur Integration auch dazu ausgelegt ist, beim nächsten Konstruieren einer geschätzten Position und Orientierung des Fahrzeugs die korrigierte erste Position und die korrigierte zweite Orientierung als vorhergehende Position bzw. vorhergehende Orientierung zu verwenden.

## Claims

1. Method for determining the position and the orientation of a vehicle by means of a location system mounted on the vehicle, this location system comprising a satellite geolocation unit, an inertial navigation unit, an inertial measurement integration sub-module and a correction sub-module, this method comprising the following steps:

a) the measurement (76), by the satellite geolocation unit, of the position of the vehicle or of the position and of the speed of the vehicle,
b) the measurement (74), by the inertial navigation unit, of the acceleration and of the angular speed of the vehicle,
c) the construction (74), by the inertial measurement integration sub-module, of an estimated position and orientation of the vehicle on the basis of a previous position and of a previous orientation of the vehicle and using the measurements of the acceleration and of the angular speed which were carried out since this previous position and this previous orientation of the vehicle, then
d) the correction (76), by the correction sub-module and using the measurements of the geolocation unit, of this estimated position and orientation in order to obtain a first corrected position and a first corrected orientation, the first corrected orientation notably containing a corrected yaw angle of the vehicle, the method further comprising:

e) the obtention (80), by the location system, of a measurement of the yaw angle of the vehicle, which is independent of the measurements of the angular speed carried out by the inertial navigation unit, then
f) the replacement (102), in the first corrected orientation, of the corrected yaw angle with the measured yaw angle, in order to obtain a second corrected orientation, then
g) the outputting (106), on an output of the location system, of the first corrected position and of the second corrected orientation as the determined position and orientation, respectively, for the vehicle, and the use (108), during the next execution of step c), of the first corrected position and of the second corrected orientation as the previous position and previous orientation, respectively.

2. Method according to Claim 1, wherein the method comprises:

- verifying (100) that a set of one or more predetermined conditions is met, this set of conditions comprising at least one condition chosen from the group consisting of the following conditions:

1) the margin of error on the measured yaw angle is greater than a predetermined threshold,
2) the margin of error on the corrected yaw angle is less than a predetermined threshold,
3) the deviation between the measured yaw angle and the corrected yaw angle is less than a predetermined threshold, and

- as long as this set of conditions is not met, steps f) and g) are executed (102), then
- as soon as this set of conditions is met, steps f) and g) are inhibited (104).

3. Method according to Claim 2, wherein, from the time when steps f) and g) are inhibited and as long as the predetermined set of conditions remains met, the use of the measured yaw angle for determining the orientation of the vehicle is inhibited.

4. Method according to Claim 2 or 3, wherein steps f) and g) are executed during a transition phase in which the determination method begins.

5. Method according to any one of the preceding claims, wherein the obtention of a measurement of the yaw angle, which is independent of the measurements of the angular speed carried out by the inertial navigation unit, comprises:

- calculating (84) a first angle on the basis of a ratio between the measured speeds of the vehicle along a first and a second orthogonal direction, respectively, these first and second directions being fixed and parallel to the surface of the earth, then
- generating the measured yaw angle on the basis of this first angle.

6. Method according to Claim 5, wherein the generation of the measured yaw angle on the basis of the first angle comprises:

- the detection (86), by the location system, of a rearward movement of the vehicle, a forward movement being defined as being a movement of the vehicle in the direction towards which points a horizontal oriented axis $x_b$ of a movable reference marker attached to the vehicle without any degree of freedom, and the rearward movement being a movement in a direction opposite to the direction towards which the oriented axis $x_b$ points, and
- when a rearward movement of the vehicle is detected, the measured yaw angle is taken to be equal (90) to the first angle plus 180°, and
- in the absence of detection of a rearward movement of the vehicle, the measured yaw angle is taken to be equal (88) to the first angle.

7. Method according to Claim 6, wherein the detection of a rearward movement of the vehicle comprises:

- obtaining (86), on the basis of measurements of an accelerometer of the inertial navigation unit, acceleration of the vehicle along the direction of forward movement of the vehicle, this accelerometer being arranged in the vehicle in such a way that a positive measurement of the acceleration of the vehicle along the oriented axis $x_b$ means that the vehicle accelerates by moving forward, then
- calculating (86) the speed of the vehicle along the direction of forward movement on the basis of the acceleration obtained, then
- comparing (86) the calculated speed with a predetermined threshold, and

- when the calculated speed is greater than this threshold, the absence of detection of a rearward movement, and
- when the calculated speed is less than this threshold, the detection of a rearward movement.

8. Method according to any one of Claims 5 to 7, wherein the measured speeds of the vehicle along the first and second orthogonal directions, respectively, are obtained on the basis of measurements of the position or of the speed of the vehicle carried out by the satellite geolocation unit.

9. Method according to Claim 6, wherein:

- the measured speeds of the vehicle along the first and second orthogonal directions, respectively, are obtained on the basis of measurements of the position or of the speed of the vehicle carried out by the satellite geolocation unit, and
- the detection of a rearward movement of the vehicle comprises:

- comparing a first term with a second term, the first term being equal to $|\alpha-(\psi(k)-\pi)|$ and the second term being equal to $|\alpha-(\psi(k)|$, where:

- $\alpha$ is the first calculated angle for an instant k and expressed in radians,
- $\psi(k)$ is equal to the corrected yaw angle at instant k expressed in radians or to the value, expressed in radians, of the yaw angle measured at instant k by an additional sensor independent of the satellite geolocation unit, the yaw angle being the yaw angle of said movable reference marker, and
- when the first term is lesser than the second term, the detection of a rearward movement, and
- when the first term is greater than the second term, the absence of detection of a rearward movement.

10. Method according to any one of the preceding claims, wherein, during step d), a Kalman filter is implemented to correct the position and the orientation which are estimated by the inertial measurement integration module.

11. Microprocessor-readable information recording medium (24), **characterized in that** this medium comprises instructions for carrying out a method according to any one of the preceding claims, when these instructions are executed by the microprocessor.

12. Location system, capable of being mounted on a vehicle, for determining the position and the orientation of this vehicle, this location system comprising:

- a satellite geolocation unit (10) capable of measuring the position of the vehicle or the position and the speed of the vehicle,
- an inertial navigation unit (12) containing an accelerometer (14) and a gyrometer (16) for measuring the acceleration and the angular speed of the vehicle,
- an inertial measurement integration sub-module (30) configured to construct an estimated position and orientation of the vehicle on the basis of a previous position and of a previous orientation of the vehicle and using the measurements of the acceleration and of the angular speed which were carried out since this previous position and this previous orientation of the vehicle, then
- a correction sub-module (32) configured to correct, using the measurements of the geolocation unit, the estimated position and orientation in order to obtain a first corrected position and a first corrected orientation, the first corrected orientation notably containing a corrected yaw angle of the vehicle,
- the system comprising a substitute sub-module (50) configured to:

- obtain a measurement of the yaw angle of the vehicle, which is independent of the measurements of the angular speed carried out by the gyrometer of the inertial navigation unit, then
- replace, in the first corrected orientation, the corrected yaw angle with the measured yaw angle, in order to obtain a second corrected orientation, then
- deliver, on an output of the location system, the first corrected position and the second corrected orientation as the determined position and orientation, respectively, for the vehicle, and
- the integration sub-module (32) also being configured to use, during the next construction of an estimated position and orientation of the vehicle, the first corrected position and the second corrected orientation as the previous position and the previous orientation, respectively.

Fig. 1

Fig. 2

EP 3 869 155 B1

Fig. 3

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009326740 A1
- US 2018017390 A1
- US 2009326740 A

**Littérature non-brevet citée dans la description**

- **S. GODHA**. Performance Evaluation of Low Cost MEMS-Based IMU Integrated With GPS for Land Vehicle Navigation Application. *PhD report*, 2006
- **SYED ZAINAB**. Economical and Robust Inertial Sensor Configuration for a Portable Navigation System. *GNSS 2007 - Proceedings of the 20th international technical meeting of the satellite division of the institute of navigation*, 28 September 2007, 2129-2135